# EUROPÄISCHE PATENTSCHRIFT

(11) **EP 2 935 052 B1**
(45) Veröffentlichungstag und Bekanntmachung des Hinweises auf die Patenterteilung: **07.12.2016**
(21) Anmeldenummer: 13811382.4
(22) Anmeldetag: 13.12.2013
(51) Int. Cl.: B65G 1/02, B65G 1/04

(54) **LAGER, INSBESONDERE LAGERANORDNUNG, INSBESONDERE LAGER FÜR CONTAINER**
STORAGE DEVICE, IN PARTICULAR STORAGE ARRANGEMENT, IN PARTICULAR STORAGE DEVICE FOR CONTAINERS
DISPOSITIF DE STOCKAGE, NOTAMMENT SYSTÈME DE STOCKAGE, EN PARTICULIER DISPOSITIF DE STOCKAGE POUR CONTENEURS

(30) Priorität: 21.12.2012 DE 102012025154
(43) Veröffentlichungstag der Anmeldung: 28.10.2015
(73) Patentinhaber: SEW-EURODRIVE GmbH & Co. KG, 76646 Bruchsal (DE)
(72) Erfinder: JUNGINGER, Alexander, 75196 Remchingen-Wilferdingen (DE); SCHÖNUNG, Frank, 76676 Graben-Neudorf (DE); SCHMIDT, Josef, 76676 Graben-Neudorf (DE); MANZ, Friedrich, 76703 Kraichtal-Münzesheim (DE); KÖVARI, Lars, 76351 Linkenheim-Hochstetten (DE); GRIMM, Thilo, 28329 Bremen (DE)
(86) Internationale Anmeldenummer: PCT/EP2013/003776
(87) Internationale Veröffentlichungsnummer: WO 2014/095015

(56) Entgegenhaltungen:
- WO-A1-2005/002998
- CA-A1- 2 486 117
- DE-A1- 19 626 966
- DE-A1-102009 049 563
- US-A- 3 606 023
- US-A- 4 099 472
- US-A- 4 930 643
- US-B1- 7 997 213

## Beschreibung

Die Erfindung betrifft ein Lager, insbesondere eine Lageranordnung, insbesondere ein Lager für Container.

Es ist allgemein bekannt, dass in einem Lager Objekte einlagerbar und auslagerbar sind.

Aus der US 4 930 643 A ist ein gattungsgemässes modular aufgebautes Lager bekannt.

Aus der US 4 099 472 A ist ein frei stehendes Lagersystem bekannt.

Aus der US 7 997 213 B1 ist ein Container für Ladung bekannt.

Aus der US 3 606 023 A ist ein modular aufgebautes Weinflaschenregal bekannt.

Aus der CA 2 486 117 A1 ist ein Regallager mit einschiebbaren Plattenteilen bekannt.

Aus der De 10 2009 049 563 A1 sind ein Shuttle-Kanallager, ein Shuttle-Bahnhof und ein Shuttle bekannt.

Aus der WO 2005/002998 A1 ist ein spurgeführtes Transportsystem bekannt, wobei die Transportfahrzeuge induktiv versorgbar sind.

Aus der DE 196 26 966 A1 ist ein spurgeführtes Transportsystem mit Transportfahrzeugen bekannt, wobei eine induktive Versorgung der Fahrzeuge zumindest teilweise ermöglicht ist.

Der Erfindung liegt daher die Aufgabe zugrunde, ein Lager mit einem sehr hohen Durchsatz an Objekten weiterzubilden.

Erfindungsgemäß wird die Aufgabe bei dem Lager nach den in Anspruch 1 angegebenen Merkmalen gelöst.
Wichtige Merkmale der Erfindung bei dem Lager, insbesondere bei der Lageranordnung, insbesondere bei dem Lager für Container, sind, dass das Lager gleichartige aufeinander gestapelt angeordnete Module aufweist,
wobei maximal n Module übereinander gestapelt angeordnet sind, insbesondere also das Lager n von Modulen gebildete Stockwerke aufweist,
wobei das Lager Abladebereiche aufweist, welche aus weniger als n übereinander gestapelten Modulen bestehen, insbesondere also jeweils eine Höhe, insbesondere Stockwerkhöhe, von weniger als n übereinander gestapelten Modulen aufweisen,
wobei n eine ganze Zahl größer als 1 ist.
Von Vorteil ist dabei, dass jedem Stockwerk ein Abladebereich zuordenbar ist und somit ein schnelles und einfaches Einlagern beziehungsweise Auslagern eines Containers ermöglicht ist.
Unter Container werden nicht nur bei Schifftransporten übliche Container verstanden sondern auch andere Behältnisse, die entsprechend mit einem Fahrzeug aufnehmbar sind und auf den Auflageabschnitten der Module einlagerbar sind.

Unter Behältnisse werden hier auch Euro-Paletten, Euro-Pool-Palletten oder sonstige Lastaufnahmemittel verstanden.
Bei einer vorteilhaften Ausgestaltung weist die Menge der Stockwerkhöhen der Abladebereiche des Lagers ganze Zahlen von n_min bis n-1 oder bis n auf, insbesondere wobei die Stockwerkhöhe, insbesondere Stapelhöhe, der Anzahl der jeweils übereinander gestapelten Module entspricht, insbesondere wobei n_min eine ganze Zahl ist, die kleiner ist als n, insbesondere wobei n_min der im Boden versenkt angeordneten Stockwerkhöhe entspricht. Von Vorteil ist dabei, dass ein schnelles Einlagern und Auslagern der Container ermöglicht ist. Denn entweder wird der Container auf den Auflageabschnitten des Moduls gelagert und später von einem Fahrzeug abtransportiert oder das Fahrzeug wartet schon auf den nächsten Container, den es nach Aufnahme im selben Stockwerk ablegt, im Abladebereich. Somit ist eine Nutzung des Aufzugs nur in Sonderfällen notwendig.

Bei einer vorteilhaften Ausgestaltung nimmt die jeweilige Stockwerkhöhe der Abladebereiche von einem maximal hohen Abladebereich aus mit zunehmendem Abstandsbetrag, insbesondere in horizontaler Richtung , insbesondere in horizontaler Längsrichtung und in horizontaler Querrichtung, monoton ab.

Bei einer vorteilhaften Ausgestaltung ist das jeweilige, insbesondere das jeweils oberste der übereinander gestapelten Module, nach oben offen, insbesondere also von oben mit einem Container befüllbar ist, insbesondere der dabei auf einem Auflageabschnitt absetzbar ist. Von Vorteil ist dabei, dass ein schnelles Beladen mit einem Kran aus vertikaler Richtung ausführbar ist.

Das Modul weist jeweils eine Bodenplatte auf und daran befestigte, insbesondere jeweils gleich lange, Säulen, insbesondere Doppel-T-Träger, wobei auf den Säulen ein weiteres Modul aufsetzbar ist. Von Vorteil ist dabei, dass das Modul einfach herstellbar ist.

Der auf dem Auflageabschnitt eingelagerte Container ist von der Bodenplatte derart beabstandet, dass ein Fahrzeug zumindest teilweise unter den Container verfahrbar ist,
insbesondere wobei das Fahrzeug ein Hubwerk aufweist, mit dem der Container bei ausgefahrenem Hubwerk von dem Auflageabschnitt abgehoben angeordnet ist. Von Vorteil ist dabei, dass ein einfaches Transportieren des Containers ermöglicht ist.

Bei einer vorteilhaften Ausgestaltung ist das Fahrzeug samt auf dem Hubwerk des Fahrzeugs aufgenommenem Container auf der Bodenplatte des Moduls in horizontaler Längsrichtung und/oder Querrichtung durch das Modul durchbewegbar. Von Vorteil ist dabei, dass ein schneller Transport durch das Lager zu der vorgesehenen Lagerstelle ermöglicht ist.

Erfindungsgemäss ist in der Bodenplatte ein Primärleiter zur induktiven Versorgung des Fahrzeugs angeordnet,

insbesondere wobei das Fahrzeug an seiner Unterseite eine Sekundärwicklung aufweist, die mit dem Primärleiter induktiv koppelbar ist, so dass Energie übertragbar ist, insbesondere wobei der Sekundärwicklung eine Kapazität derart in Reihe oder parallel zugeschaltet ist, dass die zugehörige Resonanzfrequenz im Wesentlichen der Frequenz des in den Primärleiter eingeprägten Wechselstromes entspricht. Von Vorteil ist dabei, dass eine berührungslose Energieübertragung ermöglicht ist.
Bei einer vorteilhaften Ausgestaltung weist das Modul einen von der Bodenplatte beabstandeten Primärleiterabschnitt auf zur induktiven Versorgung eines Verbrauchers, insbesondere eines Kühlaggregats, eines Containers,
insbesondere wobei der Container an seiner Seite eine Sekundärspule aufweist, die mit dem Primärleiterabschnitt induktiv koppelbar ist, so dass Energie übertragbar ist,

insbesondere wobei der Sekundärspule eine Kapazität derart in Reihe oder parallel zugeschaltet ist, dass die zugehörige Resonanzfrequenz im Wesentlichen der Frequenz des in den Primärleiter eingeprägten Wechselstromes entspricht,
insbesondere wobei der Sekundärspulenstrom einer Spannungsanpassungseinheit zur Versorgung des Verbrauchers zugeführt wird. Von Vorteil ist dabei, dass auch ein Verbraucher des Containers nach Einlagerung, also nach Entfernen des Fahrzeugs, versorgbar ist.

Bei einer vorteilhaften Ausgestaltung weist am oberen Endbereich des Moduls, insbesondere am oberen Endbereich einer Säule, ein Steckverbinderteil angeordnet ist und am unteren Endbereich des Moduls, insbesondere am unteren Endbereich einer Säule, ein entsprechendes Gegensteckverbinderteil,

insbesondere so dass beim Aufeinanderstapeln der Module das Gegensteckverbinderteil in das Steckverbinderteil steckverbunden wird. Von Vorteil ist dabei, dass die Elektrifizierung automatisch mit Herstellung des Lagers mitherstellbar ist.
Bei einer vorteilhaften Ausgestaltung sind jeweils zwei benachbarte Module miteinander formschlüssig verbunden, insbesondere an einer jeweiligen Seite des Moduls eine Nut, insbesondere eine schwalbenschwanzartig ausgeformte Nut, angeordnet ist, so dass ein Keil in zwei zueinander benachbarte Nuten einführbar ist. Von Vorteil ist dabei, dass eine Ausrichtung und Verbindung in einfacher und tragfähig stabiler Weise ermöglicht ist.

Erfindungsgemäss umfasst der Primärleiter in der Bodenplatte in Längsrichtung und in Querrichtung verlaufende Abschnitte. Von Vorteil ist dabei, dass das Fahrzeug nicht nur beim Durchfahren des Moduls sondern auch beim seitlich gerichteten Ablagern eines Containers berührungslos mit Energie versorgbar ist.

Bei einer vorteilhaften Ausgestaltung ist ein jeweiliger Auflageabschnitt auf der Bodenplatte angeordnet.
Bei einer vorteilhaften Ausgestaltung weist das Lager eine Deckplatte auf, die einen Maschinenraum, einen Windgenerator und/oder einen Solargenerator aufweist. Von Vorteil ist dabei, dass das Lager mit regenerativen Energiequellen zumindest teilweise versorgbar ist.
Bei einer vorteilhaften Ausgestaltung weist das Lager in einem Aufzugsbereich ein weiteres Modul auf, welches in seiner Bodenplatte eine derart große Ausnehmung aufweist, dass ein Container mittels eines Hubwerks durch die Ausnehmung hindurchbewegbar ist, insbesondere wobei das Modul ein oder mehrere Türelemente, insbesondere eine Rolltür und/oder eine Schiebetür, aufweist. Von Vorteil ist dabei, dass die Sicherheit erhöhbar ist.

Außerdem weisen alle Module gleich lange Säulen auf, die auf einer Bodenplatte befestigt sind, deren Außenabmaße jeweils bei allen Modulen gleich sind.

Weitere Vorteile ergeben sich aus den Unteransprüchen.

Die Erfindung wird nun anhand von Abbildungen näher erläutert:

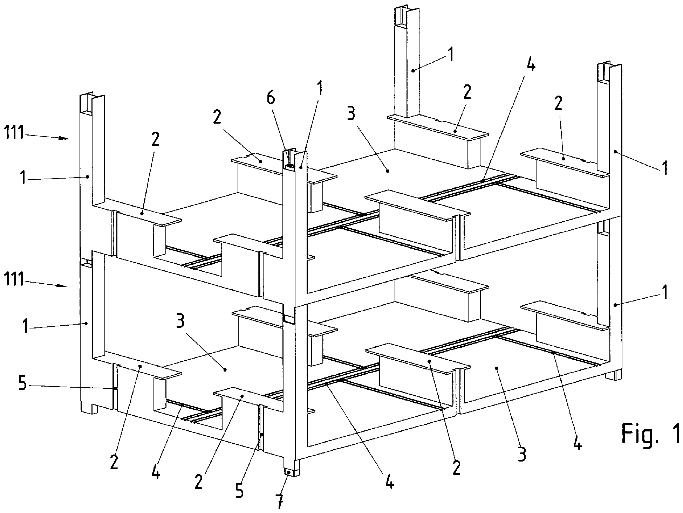

In der Figur 1 ist eine Schrägansicht zweier Module eines Container-Lagers gezeigt.

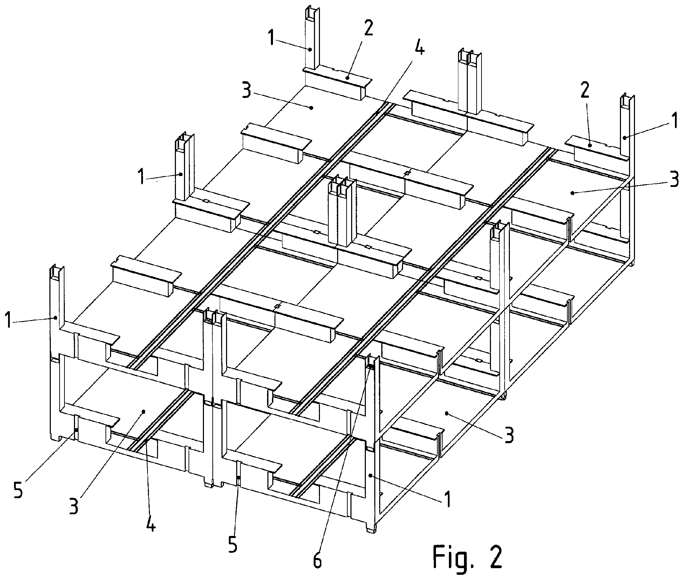

In der Figur 2 ist eine Schrägansicht eines acht Module 111 umfassenden Ausschnitts des Container-Lagers gezeigt.

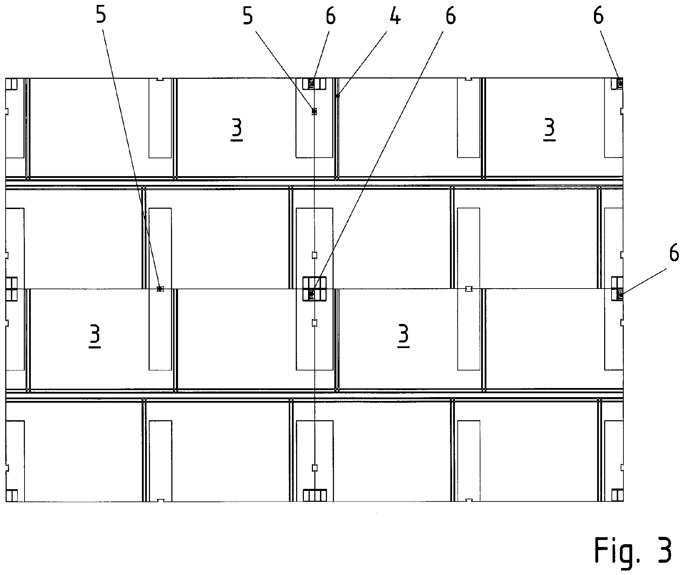

In der Figur 3 ist eine Draufsicht auf einen Ausschnitt des Containerlagers gezeigt, wobei vier Module 111 gezeigt sind, die jeweils miteinander formschlüssig verbunden sind und jeweils einen Steckverbinderteil 6 zur elektrischen Versorgung aufweisen
In der Figur 4 ist ein Modul 110 für den Aufzugsbereich gezeigt.
In der Figur 5 ist ein Modul gezeigt, das im Unterschied zum Modul 111 zusätzlich einen seitlich angeordneten Primärleiterabschnitt 50 aufweist, so dass ein Container mit elektrischem Verbraucher induktiv versorgbar ist.
In der Figur 6 ist ein Modul 111 in Schrägansicht gezeigt.
In der Figur 7 ist ein Dachplattenmodul mit Maschinenraum 71 gezeigt.

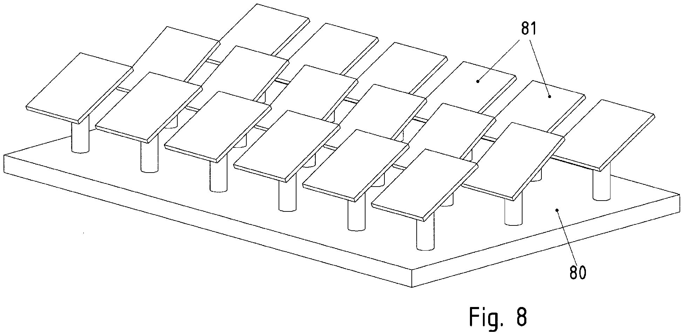

In der Figur 8 ist ein Dachplattenmodul mit Solargeneratoren 81 gezeigt.

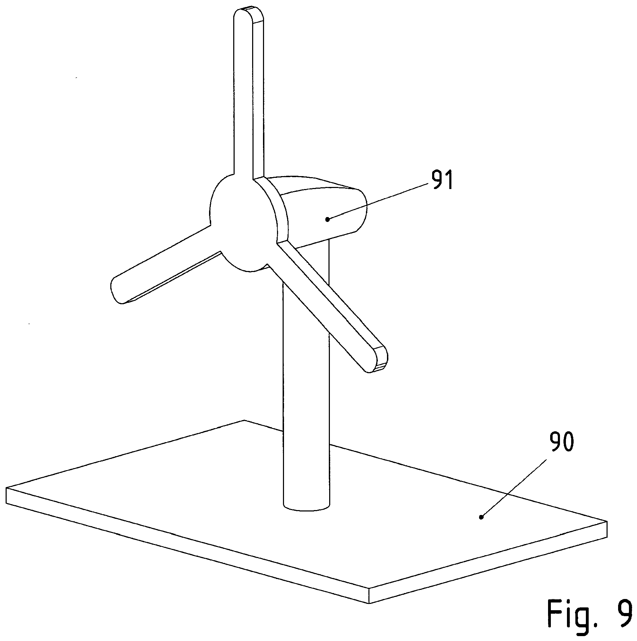

In der Figur 9 ist ein Dachplattenmodule mit Windkraftgeneratoren 91 gezeigt.
In der Figur 10 ist ein einen Verfahrbereich bildendes Modul gezeigt.
In der Figur 11 ist ein Querschnitt durch das Lager gezeigt.
In der Figur 12 ist ein weiteres Lagersystem gezeigt.

Das Container-lager ist aus Modulen 111 aufgebaut. Jedes dieser Module 111 weist eine Bodenplatte 3 mit Verfahrfläche auf, wobei auf der Verfahrfläche ein fahrerloses Transportsystem (FTS) und/oder ein automatisch geführtes Fahrzeug (AGV) bewegbar ist. Das Lager ist wegen des modularen Aufbaus des Lagers durch Anreihen und Verbinden weiterer Module 111 in vertikaler und in allen horizontalen Richtung erweiterbar.

Das als FTS oder AGV eingesetzte Fahrzeug weist einen Elektromotor auf, der aus einer an den Primärleiter induktiv angekoppelten Sekundärwicklung angekoppelt ist.

Vorzugsweise ist der Sekundärwicklung eine Kapazität derart in Reihe oder parallel zugeschaltet, dass die zugehörige Resonanzfrequenz im Wesentlichen der Frequenz des in den Primärleiter eingeprägten Wechselstromes entspricht.

Das Fahrzeug weist ein Hubwerk auf, so dass das Fahrzeug bei eingefahrenem Hubwerk unter einen aufgebockt aufgestellten Container fahren kann und diesen dann durch Ausfahren des Hubwerks aufnehmen und transportieren.

Die Bodenplatte 3 weist Stahl und Beton auf.

An den Ecken der im Wesentlichen rechteckförmig ausgeformten Bodenplatte sind gleich lange Säulen angeordnet, welche vorzugsweise als Doppel-T-Träger ausgeführt sind.

Somit ist am oberen Ende der Säulen wiederum ein weiteres gleichartiges Modul 111 aufsetzbar.

Das Modul weist in der Bodenplatte 3 einen Primärleiter auf, so dass das Fahrzeug induktiv versorgbar ist. Zusätzlich weist das Fahrzeug auch einen Energiespeicher auf, um kurze Strecken auch ohne induktive Versorgung zu überbrücken oder elektrische Spitzenlasten abzupuffern.

Das Fahrzeug kann sich einerseits längs durch das Modul 111 entlang des Primärleiters 4 bewegen und andererseits quer. Bei der Bewegung in Querrichtung wird der Container auf die Auflageabschnitte 2 gefördert und durch Einfahren des Hubwerks des Fahrzeugs dort abgesenkt. Das Fahrzeug fährt dann aus diesem Bereich weg.

Zur formschlüssigen Verbindung weisen die Module 111 jeweils eine Nut 5 auf, so dass zwei benachbarte Module mittels eines Keils, der in die beiden ineinander mündenden Nuten 5 eingeschlagen wird, ausrichtbar und verbindbar sind.

Vorzugsweise weist die Nut 5 einen schwalbenschwanzartigen Querschnitt auf.

An der Oberseite einer der Säulen 1, die jeweils vorzugsweise als Doppel-T-Träger ausgeführt ist, des Moduls 111 ist ein Steckverbinderteil 6 angeordnet und an der Unterseite der Säule 1 ein entsprechendes Gegensteckverbinderteil 7. Somit ist beim Aufsetzen eines Moduls 111 auf ein erstes Modul 111 auch eine elektrische Verbindung herstellbar, so dass der Primärleiter 4 versorgt ist mit Wechselstrom.

Der Auflageabschnitt 2 des Moduls 111 ist jeweils zum Aufbocken eines Containers geeignet ausgeführt.

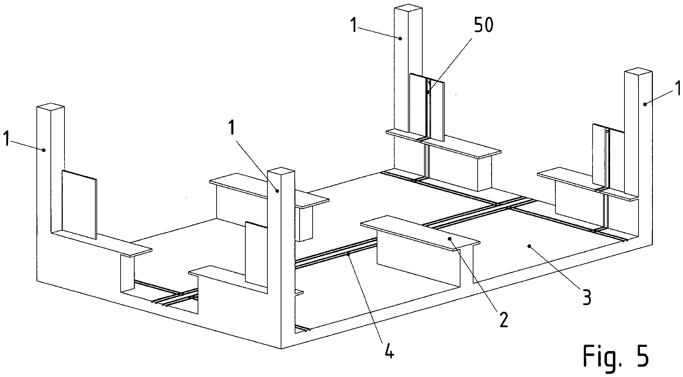

Das Lager weist einerseits Bereiche auf, die mit Modulen 111 gebildet sind, so dass Container einlagerbar sind. In einem weiteren Bereich sind Kühlcontainer einlagerbar, wofür modifizierte Module 111 verwendet werden, die einen seitlich angeordneten Primärleiterabschnitt 50 aufweisen, wie in Figur 5 gezeigt. Somit ist am Container eine Spannungsversorgungseinheit verbindbar, die eine Sekundärwicklung aufweist, welche an den Primärleiterabschnitt 50 induktiv ankoppelbar ist. Die Spannungsversorgungseinheit wandelt die induzierte Spannung in eine übliche Drehspannung um, so dass der Verbraucher mit der Spannungsversorgungseinheit elektrisch verbindbar und aus ihr versorgbar ist.

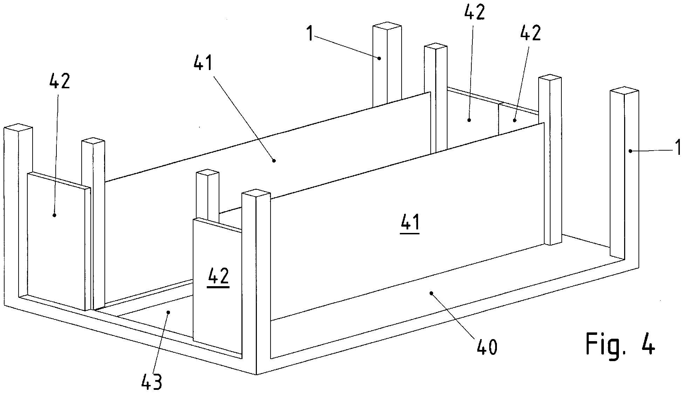

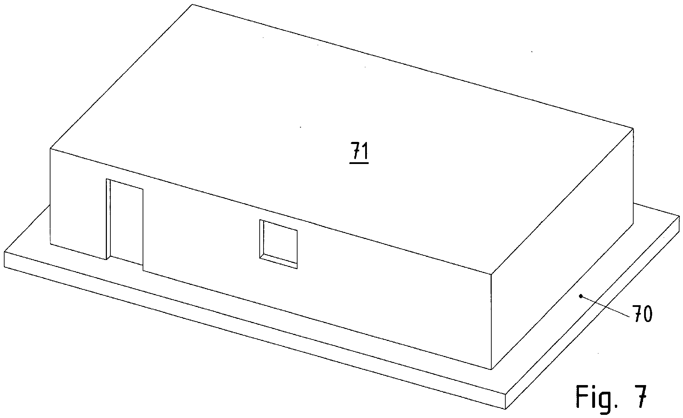

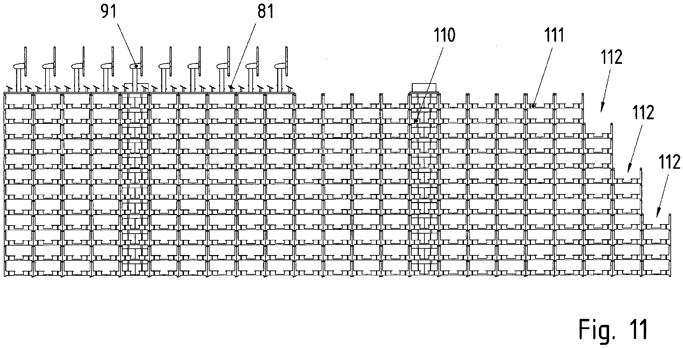

Wie in Figur 11 gezeigt, weist das Lager aber auch einen Aufzugsberiech auf, wobei hierfür Module gemäß Figur 4 eingesetzt werden. Das zugehörige Dachmodul ist in Figur 7 gezeigt. Wie in Figur 4 gezeigt, weist jedes dieser im Aufzugsbereich eingesetzten Module eine Ausnehmung 43 auf, durch die ein Fahrzeug mit Container hindurchbewegbar ist. Im Maschinenraum 71 des Dachmoduls ist hierzu ein Hubwerk angeordnet. Außerdem sind in Längsrichtung ein Rolltor 41 und in Querrichtung eine Schiebetüre 42 angeordnet, so dass zwischen dem Verfahrbereich und der Ausnehmung 43 eine Sicherheitseinrichtung angeordnet ist.

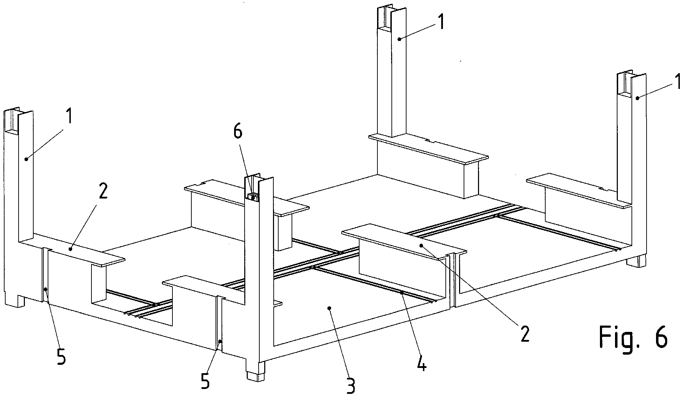

Wie in Figur 6 gezeigt, weist das Modul vier Säulen auf, von denen eine mit dem Steckverbinderteil 6 versehen ist und zu jeder Seite hin jeweils mindestens ein Nut 5 vorgesehen ist.

Wie in Figur 7 gezeigt, ist der Maschinenraum 71 auf einer Bodenplatte angeordnet, die als Dachplatte im Aufzugsbereich verwendbar ist.

Zur Bildung des weiteren Dachs des Lagers sind weitere Bodenplatten (80, 90) gezeigt, die Solargeneratoren 81 oder Windkraftgeneratoren 91 tragen, wodurch ein wesentlicher Anteil des elektrischen Energiebedarfs regenerativ erzeugbar ist. Da das Lager vorteiligerweise in einem Hafen anordenbar ist, ist eine hohe Windausbeute - auch nachts - erreichbar.

Außerdem sind auch auf dem Dach Module mit Wassertanks vorsehbar, so dass Solarenergie dort abspeicherbar ist. Auch andere Speichertechnolohieen sind in einem auf dem Dach angerodneten Modul vorsehbar, wobei hierdurch eine gelcihmäßige Versorgung des Lagers mit elektrischer Leistung ermöglicht ist. Auf diese Weise ist das Lager mit einer möglichst niedrigen Anschlussleistung ans Öffentliche Versorgungsnetz anschließbar.

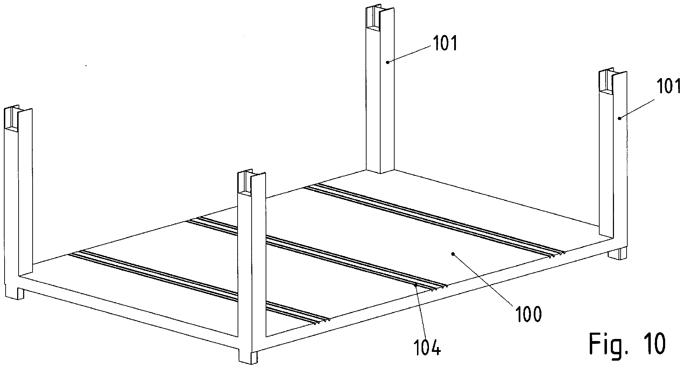

Innerhalb des Lagers sind auch Verkehrswege mit größeren Freiräumen durch Module ausführbar, die entsprechend Figur 10 aufgebaut sind. Diese weisen nur eine Bodenplatte 100 mit Primärleiter 104 und Säulen 101 auf, insbesondere wobei eine der Säulen mit einem Steckverbinderteil und Gegensteckverbinderteil ausgeführt sind, so dass auch der Primärleiter 104 wiederum versorgbar ist. Wie auch bei den Modulen 111 ist dann der Strom vom einen Ende der Säule zum anderen Ende der Säule weiterleitbar und somit das gesamte Lager elektrifiziert.

Wie in Figur 11 gezeigt, weist das Lager nicht nur Bereiche zum Einlagern von Containern in Module 111 und Aufzugsberieche auf sondern auch Abladebereiche 112. Dort sind zwar auch die Module 111 übereinander gestapelt, allerdings nicht alle in derselben Höhe, insbesondere also im gleichen Stockwerk.

Das Lager weist also in den für den Kran verfügbaren Abladebereichen 112 verschiedene Höhen auf. Vorzugsweise ist jeweils ein Abladebereich 112 vorgesehen für jede Etage des Lagers. In Figur 11 ist ein Abladebereich 112 im 9. Stockwerk, im 6. Stockwerk und im 3. Stockwerk vorgesehen.

Senkrecht zur Schnittrichtung der Figur 11 sind weiter verschieden hohe Abladebereiche 112 vorgesehen. Insbesondere ist in senkrechter Richtung zum 9. Stockwerk ein Abladebereich 112 im 8. Stockwerk und im 7. Stockwerk vorgesehen. Ebenso ist in zur Schnittrichtung senkrechter Richtung zum in Figur 11 gezeigten Abladebereich 112 ein Abladebereich im 6. Stockwerk und im 5. Stockwerk vorgesehen. Die untersten drei Stockwerke sind im Erdboden versenkt angeordnet und können somit nur über den Aufzugsbereich mit Containern bestückt werden.

Auf der vom sonstigen Bereich des Lagers abgewandten Seite der Abladebereiche 112 ist ein Kran oder Hubwerk angeordnet, welches die Container aus einem Schiff entnimmt und auf die Abladebereiche 112 aufzusetzen vermag. Ebenso ist vom Abladebereich ein Container aufnehmbar und auf ein Schiff transportierbar.

Daher ist das Lager zur Zwischenlagerung für Container verwendbar.

In der äußersten Reihe von Modulen 111 des Lagers, also in der dem Schiff nächstgelegenen Reihe, ist ein erster Abladebereich im 3. Stockwerk vorgesehen, ein weitere Abladebereich im 4. Stockwerk und ein wiederum weiterer im 5. Stockwerk. Die Stockwerkreihenfolge ist also 3., 4. 5..

Das n-te Stockwerk bedeutet hierbei, dass unter dem Modul 111, also im Raumbereich der senkrechten Projektion des Moduls 111 bis zum Boden, insgesamt n-1 Module 111 gestapelt angeordnet sind.

In der nächsten parallelen Reihe des Lagers ist die Stockwerkreihenfolge ist 6., 7., 8... In der hierzu wiederum nächsten parallelen Reihe des Lagers ist die Stockwerkreihenfolge ist 9., 10., 11..

In dieser Weise sind im gesamten Abladebereich also alle Stockwerke vorgesehen mit Ausnahme der unterirdischen Stockwerke, also mit Ausnahme des 1. und 2. Stockwerks.

Somit ist ein Container auf einem der Stockwerke abladbar, wobei hierbei ein Fahrzeug im entsprechenden Abladebereich 112 angeordnet ist und den Container aufnimmt, vorzugsweise mit ausgefahrenem Hubwerk. Danach verfährt das Fahrzeug den Container zum für ihn vorgesehenen Modul 111 und setzt ihn auf den entsprechenden Auflageabschnitten 2 des Moduls 111 ab. Alternativ verfährt es den Container zum modifizierten Modul, so dass ein Kühlaggregat des modifizierten Moduls elektrisch versorgbar ist. Je nach Optimierung einer zentralen Steuerung ist auch das Nutzen des Aufzugs beim Verfahren möglich.

Das Fahrzeug weist eine Spurführung oder ein Navigationssystem auf.

Bei einem weiteren erfindungsgemäßen Ausführungsbeispiel ist das Hubwerk des Fahrzeugs von einem rückspeisefähigen Antrieb angetrieben, so dass beim Einfahren des Hubwerks Energie rückgewinnbar ist.

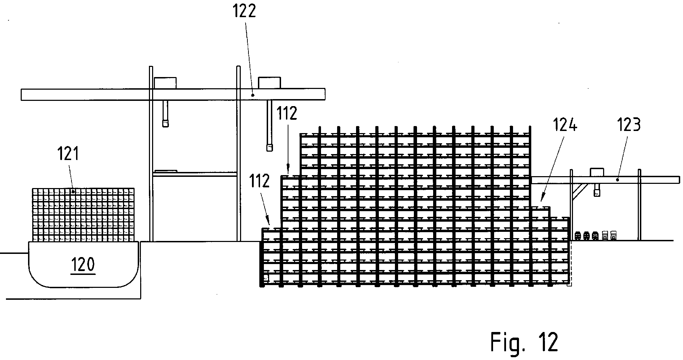

Wie in Figur 12 gezeigt, ist bei einem weiteren Lagersystem wiederum ein Herantransport von Containern 121 mittels eines Transportschiffs 120 ausführbar. Die Entladung oder Beladung des Schiffes 120 ist mittels des Containerkrans 122 ermöglicht, mit dem die verschieden hohen Abladebereiche 112 wiederum beladbar oder entladbar sind.

Auf der vom Schiff 120 abgewandten Seite ist ein weiterer Containerkran 123 angeordnet, der die Container 121 aus einem ebenfalls gestuften Aufnahmebereich 124 entnimmt oder dort ablädt.

### Bezugszeichenliste

- 1: Säule, insbesondere Doppel-T-Träger
- 2: Auflageabschnitt
- 3: Bodenplatte mit Verfahrfläche
- 4: Primärleiter
- 5: Nut
- 6: Steckverbinderteil
- 7: Gegensteckverbinderteil
- 40: Bodenplatte
- 41: Rolltor
- 42: Schiebetür
- 43: Ausnehmung für Aufzug
- 50: Primärleiterabschnitt für induktive Versorgung von Kühlcontainer
- 70: Bodenplatte
- 71: Maschinenraum, insbesondere Hubwerksantrieb für Aufzug
- 80: Bodenplatte
- 81: Solargenerator
- 90: Bodenplatte
- 91: Windkraftgenerator
- 100: Bodenplatte
- 101: Säule
- 104: Primärleiter
- 110: Modul für Aufzugsbereich
- 111: Modul
- 112: Abladebereich
- 120: Transportschiff
- 121: Container
- 122: Containerkran
- 123: Containerkran
- 124: Aufnahmebereich

## Patentansprüche

1. Lager, insbesondere Lageranordnung, insbesondere Lager für Container,
wobei das Lager gleichartige aufeinander gestapelt angeordnete Modulen (111) aufweist,
wobei maximal n Module übereinander gestapelt angeordnet sind, insbesondere also das Lager n von Modulen gebildete Stockwerke aufweist,
**wobei** das Lager Abladebereiche (112) aufweist, welche aus weniger als n übereinander gestapelten Modulen bestehen, insbesondere also jeweils eine Höhe, insbesondere Stockwerkhöhe, von weniger als n übereinander gestapelten Modulen aufweisen,
wobei n eine ganze Zahl größer als 1 ist,
**wobei** jedes **Modul eine Bodenplatte** (3) **aufweist und daran befestigte Säulen** (1) **aufweist, wobei auf den Säulen ein weiteres Modul aufsetzbar ist, dadurch gekennzeichnet, dass** der auf einem **Auflageabschnitt** (2) des Modules **eingelagerte Container von der Bodenplatte derart beabstandet ist, dass ein Fahrzeug zumindest teilweise unter den Container verfahrbar ist,**
**wobei in der Bodenplatte ein Primärleiter** (104) **zur induktiven Versorgung des Fahrzeugs angeordnet ist,**
**wobei der Primärleiter in der Bodenplatte in Längsrichtung und in Querrichtung verlaufende Abschnitte umfasst.**

2. Lager nach Anspruch 1,
**dadurch gekennzeichnet, dass**
das Lager durch Anreihen und Verbinden weiterer Module (111) in vertikaler und in allen
horizontalen Richtung erweiterbar ist.

3. Lager nach einem der vorangegangenen Ansprüche,
**dadurch gekennzeichnet, dass**
die Menge der Stockwerkhöhen der Abladebereiche (112) des Lagers die ganze Zahlen von n_min
bis n-1 oder bis n aufweist,
insbesondere wobei die Stockwerkhöhe, insbesondere Stapelhöhe, der Anzahl der jeweils übereinander gestapelten Module entspricht,
wobei n_min eine ganze Zahl ist, die kleiner ist als n, insbesondere wobei n_min der im Boden versenkt angeordneten Stockwerkhöhe entspricht.

4. Lager nach einem der vorangegangenen Ansprüche,
**dadurch gekennzeichnet, dass**
die jeweilige Stockwerkhöhe der Abladebereiche (112) von einem maximal hohen Abladebereich
aus mit zunehmendem Abstandsbetrag, insbesondere in horizontaler Richtung , insbesondere in horizontaler Längsrichtung und in horizontaler Querrichtung, monoton abnimmt.

5. Lager nach einem der vorangegangenen Ansprüche,
**dadurch gekennzeichnet, dass**
das jeweilige, insbesondere das jeweils oberste der übereinander gestapelten Modulen (111) nach
oben offen ist, insbesondere also von oben mit einem Container befüllbar ist, der dabei auf dem Auflageabschnitt (2) absetzbar ist.

6. Lager nach einem der vorangegangenen Ansprüche,
**dadurch gekennzeichnet, dass**
**die Säulen** (1) **jeweils gleich lang sind, insbesondere als Doppel-T-Träger ausgeführt** sind.

7. Lager nach einem der vorangegangenen Ansprüche,
**dadurch gekennzeichnet, dass**
**das Fahrzeug ein Hubwerk aufweist, mit dem der Container bei ausgefahrenem Hubwerk von dem Auflageabschnitt (2) abgehoben angeordnet ist.**

8. Lager nach einem der vorangegangenen Ansprüche,
**dadurch gekennzeichnet, dass**
das Fahrzeug samt auf dem Hubwerk des Fahrzeugs aufgenommenem Container auf der Bodenplatte (3) des Moduls (111) in horizontaler Längsrichtung und/oder Querrichtung durch das
Modul durchfahrbar ist.

9. Lager nach einem der vorangegangenen Ansprüche,
**dadurch gekennzeichnet, dass**
**das Fahrzeug an seiner Unterseite eine Sekundärwicklung aufweist, die mit dem Primärleiter** (104) **induktiv koppelbar ist, so dass Energie übertragbar ist,**
insbesondere wobei der Sekundärwicklung eine Kapazität derart in Reihe oder parallel zugeschaltet ist, dass die zugehörige Resonanzfrequenz im Wesentlichen der Frequenz des in den Primärleiter eingeprägten Wechselstromes entspricht.

10. Lager nach einem der vorangegangenen Ansprüche,
**dadurch gekennzeichnet, dass**
das Modul (111) einen von der Bodenplatte (3) beabstandeten Primärleiterabschnitt (50) aufweist zur induktiven Versorgung eines Verbrauchers, insbesondere eines Kühlaggregats, eines Containers angeordnet ist,
insbesondere wobei der Container an seiner Seite eine Sekundärspule aufweist, die mit dem Primärleiterabschnitt induktiv koppelbar ist, so dass Energie übertragbar ist,
insbesondere wobei der Sekundärspule eine Kapazität derart in Reihe oder parallel zugeschaltet ist, dass die zugehörige Resonanzfrequenz im Wesentlichen der Frequenz des in den Primärleiter eingeprägten Wechselstromes entspricht,
insbesondere wobei der Sekundärspulenstrom einer Spannungsanpassungseinheit zur Versorgung des Verbrauchers zugeführt wird.

11. Lager nach einem der vorangegangenen Ansprüche,
**dadurch gekennzeichnet, dass**
am oberen Endbereich des Moduls (111), insbesondere am oberen Endbereich einer Säule (1), ein Steckverbinderteil (6) angeordnet ist und am unteren Endbereich des Moduls, insbesondere am unteren Endbereich einer Säule, ein entsprechendes Gegensteckverbinderteil (7), insbesondere so dass beim Aufeinanderstapeln der Module das Gegensteckverbinderteil in das Steckverbinderteil steckverbunden wird.

12. Lager nach einem der vorangegangenen Ansprüche,
**dadurch gekennzeichnet, dass**
jeweils zwei benachbarte Module (111) miteinander formschlüssig verbunden sind, insbesondere
an einer jeweiligen Seite des Moduls eine Nut (5), insbesondere eine schwalbenschwanzartig
ausgeformte Nut, angeordnet ist, so dass ein Keil in zwei zueinander benachbarte Nuten einführbar ist.

13. Lager nach einem der vorangegangenen Ansprüche,
**dadurch gekennzeichnet, dass**
ein jeweiliger Auflageabschnitt (2) auf der Bodenplatte (3) angeordnet ist.

14. Lager nach einem der vorangegangenen Ansprüche,
**dadurch gekennzeichnet, dass**
das Lager eine Deckplatte aufweist, die einen Maschinenraum (71), einen Energiespeicher, einen Windgenerator (91), und/oder einen Solargenerator (81) aufweist,
insbesondere wobei der Energiespeicher einen Akkumulator oder einen Wassertank aufweist,
insbesondere wobei zur Gewinnung elektrischer Energie aus dem Wassertank ein Thermoelement, ein thermoelektrischer Wandler, ein Peltierelement, ein von einem Stirlingmotor angetriebener Generator und/oder ein Wasserkraftgenerator vorgesehen ist,
insbesondere wobei solarthermische Wandler dem Wassertank aufgewärmtes Wasser zuführen bei Sonneneinstrahlung.

15. Lager nach einem der vorangegangenen Ansprüche,
**dadurch gekennzeichnet, dass**
das Lager in einem Aufzugsbereich ein weiteres Module (110) aufweist, welches in seiner
Bodenplatte (40) eine derart große Ausnehmung (43) aufweist, dass ein Container mittels eines
Hubwerks durch die Ausnehmung hindurchbewegbar ist,
insbesondere wobei das Modul ein oder mehrere Türelemente, insbesondere eine Rolltür (41) und/oder eine Schiebetür (42), aufweist.

## Claims

1. Store, in particular storage arrangement, in particular store for containers,
wherein the store has modules (111) of the same kind arranged stacked on top of one another,
wherein a maximum of n modules are arranged stacked on top of one another, in particular therefore the store has n storeys formed from modules,
wherein the store has unloading regions (112) which consist of fewer than n modules stacked on top of one another, in particular therefore each have a height, in particular storey height, of fewer than n modules stacked on top of one another,
wherein n is a whole number greater than 1,
wherein each module has a base plate (3) and columns (1) fastened thereto, wherein a further module can be placed on the columns,
**characterised in that** the container stored on a support section (2) of the module is spaced from the base plate in such a way that a vehicle can travel at least partly under the container,
wherein a primary conductor (104) for inductive supply of the vehicle is arranged in the base plate,
wherein the primary conductor comprises sections running in the longitudinal direction and in the transverse direction in the base plate.

2. Store according to claim 1,
**characterised in that**
the store can be extended by adding and connecting further modules (111) in the vertical and in all horizontal directions.

3. Store according to one of the preceding claims,
**characterised in that**
the number of storey heights of the unloading regions (112) of the store has the whole numbers of n_min to n-1 or to n,
in particular wherein the storey height, in particular stacking height, corresponds to the number of modules respectively stacked on top of one another,
wherein n_min is a whole number which is less than n, in particular wherein n_min corresponds to the storey height arranged sunk in the ground.

4. Store according to one of the preceding claims,
**characterised in that**
the respective storey height of the unloading regions (112) decreases monotonically from a maximum high unloading region with increasing distance amount, in particular in the horizontal direction, in particular in the horizontal longitudinal direction and in the horizontal transverse direction.

5. Store according to one of the preceding claims,
**characterised in that**
the respective, in particular the respectively uppermost of the modules (111) stacked on top of one another, is open at the top, in particular therefore can be filled from above with a container which, in doing so, can be set down on the support section (2).

6. Store according to one of the preceding claims,
**characterised in that**
the columns (1) are each of the same length, in particular are configured as I-beams.

7. Store according to one of the preceding claims,
**characterised in that**
the vehicle has a lifting gear, with which the container is arranged lifted off from the support section (2) when the lifting gear is extended.

8. Store according to one of the preceding claims,
**characterised in that**
the vehicle together with container received on the lifting gear of the vehicle can travel in the horizontal longitudinal direction and/or transverse direction through the module on the base plate (3) of the module (111).

9. Store according to one of the preceding claims,
**characterised in that**
the vehicle has on its underside a secondary winding which can be inductively coupled to the primary conductor (104), so that energy can be transmitted,
in particular wherein a capacitance is connected to the secondary winding in series or parallel such that the associated resonant frequency corresponds substantially to the frequency of the alternating current applied to the primary conductor.

10. Store according to one of the preceding claims,
**characterised in that**
the module (111) has a primary conductor section (50), spaced from the base plate (3), for the inductive supply of a load, in particular a cooling unit, of a container,
in particular wherein the container has on its side a secondary coil which can be inductively coupled to the primary conductor section, so that energy can be transmitted,
in particular wherein a capacitance is connected to the secondary coil in series or parallel such that the associated resonant frequency corresponds substantially to the frequency of the alternating current applied to the primary conductor, in particular wherein the secondary coil current is supplied to a voltage adapting unit for supplying the load.

11. Store according to one of the preceding claims,
**characterised in that**
a plug connector part (6) is arranged at the upper end region of the module (111), in particular at the upper end region of a column (1), and a corresponding mating plug connector part (7) is arranged at the lower end region of the module, in particular at the lower end region of a column,
in particular so that when stacking the modules on top of one another the mating plug connector part is plug-connected into the plug connector part.

12. Store according to one of the preceding claims,
**characterised in that**
respectively two adjacent modules (111) are connected to one another in a form-fitting manner, in particular at a respective side of the module a groove (5), in particular a dovetail-shaped groove, is arranged, so that a key can be inserted into two mutually adjacent grooves.

13. Store according to one of the preceding claims,
**characterised in that**
a respective support section (2) is arranged on the base plate (3).

14. Store according to one of the preceding claims,
**characterised in that**
the store has a cover plate which has a machine room (71), an energy store, a wind generator (91) and/or a solar generator (81),
in particular wherein the energy store has an accumulator or a water tank,
in particular wherein a thermal element, a thermoelectric converter, a Peltier element, a generator driven by a Stirling engine and/or a hydroelectric power generator is provided for recovering electrical energy from the water tank,
in particular wherein solar-thermal converters supply heated water to the water tank on insolation.

15. Store according to one of the preceding claims,
**characterised in that**
the store has in a lift region a further module (110) which has in its base plate (40) a cutout (43) of such a size that a container can be moved through the cutout by means of a lifting gear,
in particular wherein the module has one or more door elements, in particular a rolling door (41) and/or a sliding door (42).

## Revendications

1. Dispositif de stockage, notamment ensemble de stockage, en particulier système de stockage dévolu à des conteneurs,
ledit dispositif de stockage comportant des modules (111) de même type, empilés les uns sur les autres,
sachant que n modules, au maximum, sont empilés les uns au-dessus des autres, c'est-à-dire que le dispositif de stockage compte, en particulier, n étages formés par des modules, ledit dispositif de stockage étant pourvu de zones de déchargement (112) constituées d'un nombre inférieur à n modules empilés les uns au-dessus des autres, c'est-à-dire munies en particulier, à chaque fois, d'une hauteur et notamment d'une hauteur d'étage représentant moins de n modules empilés les uns au-dessus des autres,
n étant un nombre entier supérieur à 1,
chaque module comportant un panneau de fond (3) et des colonnes (1) fixées à ce dernier, un module supplémentaire pouvant être mis en place sur lesdites colonnes,
**caractérisé par le fait que**
le conteneur entreposé sur un tronçon d'appui (2) du module présente, par rapport au panneau de fond, un espacement tel qu'un véhicule puisse, au moins en partie, être déplacé au-dessous dudit conteneur,
un conducteur primaire (104) étant logé dans ledit panneau de fond, en vue d'alimenter ledit véhicule par induction,
ledit conducteur primaire comprenant des tronçons qui s'étendent, dans ledit panneau de fond, dans la direction longitudinale et dans la direction transversale.

2. Dispositif de stockage selon la revendication 1,
**caractérisé par le fait que**
ledit dispositif de stockage peut être agrandi dans la direction verticale, et dans toutes les directions horizontales, par alignement et solidarisation de modules (111) supplémentaires.

3. Dispositif de stockage selon l'une des revendications précédentes,
**caractérisé par le fait que**
la gamme des hauteurs d'étages des zones de déchargement (112) dudit dispositif de stockage inclut les nombres entiers allant de n_min à n-1, ou à n,
sachant notamment que la hauteur d'étage, en particulier la hauteur d'empilement, correspond au nombre des modules respectivement empilés les uns au-dessus des autres, n_min étant un nombre entier plus petit que n, sachant notamment que n_min correspond à la hauteur d'étages occupant un emplacement encaissé dans le sol.

4. Dispositif de stockage selon l'une des revendications précédentes,
**caractérisé par le fait que**
la hauteur d'étages respective des zones de déchargement (112) décroît de manière monotone à partir d'une zone de déchargement de hauteur maximale, avec accroissement de la cote d'espacement, notamment dans la direction horizontale, en particulier longitudinalement dans le sens horizontal et transversalement dans le sens horizontal.

5. Dispositif de stockage selon l'une des revendications précédentes,
**caractérisé par le fait que**
le module considéré, en particulier le module occupant respectivement la position la plus haute au sein des modules (111) empilés les uns au-dessus des autres, est ouvert vers le haut en pouvant notamment, par conséquent, être empli de haut en bas par un conteneur pouvant alors être déposé sur le tronçon d'appui (2).

6. Dispositif de stockage selon l'une des revendications précédentes,
**caractérisé par le fait que**
les colonnes (1) sont respectivement dotées d'une longueur identique et sont réalisées, en particulier, sous la forme de supports en double T.

7. Dispositif de stockage selon l'une des revendications précédentes,
**caractérisé par le fait que**
le véhicule comporte un mécanisme de levage, par lequel le conteneur occupe une position soulevée à l'écart du tronçon d'appui (2) à l'état déployé dudit mécanisme de levage.

8. Dispositif de stockage selon l'une des revendications précédentes,
**caractérisé par le fait que**
le véhicule peut être déplacé d'un trait à travers le module sur le panneau de fond (3) dudit module (111), dans la direction longitudinale horizontale et/ou dans la direction transversale, conjointement à un conteneur reçu par le mécanisme de levage dudit véhicule.

9. Dispositif de stockage selon l'une des revendications précédentes,
**caractérisé par le fait que**
le véhicule présente, à sa face inférieure, un enroulement secondaire pouvant être couplé inductivement au conducteur primaire (104), de manière à permettre une transmission d'énergie,
sachant notamment qu'un condensateur est branché en série ou en parallèle avec ledit enroulement secondaire, de façon telle que la fréquence de résonance associée corresponde, pour l'essentiel, à la fréquence du courant alternatif injecté dans ledit conducteur primaire.

10. Dispositif de stockage selon l'une des revendications précédentes,
**caractérisé par le fait que**
le module (111) comporte un segment (50) de conducteur primaire situé à distance du panneau de fond (3), en vue d'alimenter par induction un appareil consommateur, en particulier un groupe de refroidissement d'un conteneur,
sachant notamment que ledit conteneur est latéralement pourvu d'une bobine secondaire pouvant être couplée inductivement audit segment de conducteur primaire, de manière à permettre une transmission d'énergie,
sachant, en particulier, qu'un condensateur est branché en série ou en parallèle avec ladite bobine secondaire, de façon telle que la fréquence de résonance associée corresponde, pour l'essentiel, à la fréquence du courant alternatif injecté dans ledit conducteur primaire, étant notamment précisé que le courant de ladite bobine secondaire est délivré à une unité d'adaptation de tension, en vue de l'alimentation dudit appareil consommateur.

11. Dispositif de stockage selon l'une des revendications précédentes,
**caractérisé par le fait**
**qu'**une partie (6) de connexion enfichable est placée dans la région extrême supérieure du module (111), en particulier dans la région extrême supérieure d'une colonne (1), une partie complémentaire correspondante (7) de connexion enfichable étant placée dans la région extrême inférieure dudit module, en particulier dans la région extrême inférieure d'une colonne,
notamment de façon telle que ladite partie complémentaire de connexion enfichable soit raccordée par emboîtement dans ladite partie de connexion enfichable au stade de l'empilement mutuel des modules.

12. Dispositif de stockage selon l'une des revendications précédentes,
**caractérisé par le fait que**
deux modules voisins (111) respectifs sont reliés l'un à l'autre par complémentarité de formes, sachant notamment qu'une rainure (5), en particulier une rainure de configuration du type queue d'aronde, est pratiquée dans une face considérée du module, de façon telle qu'un coin puisse être inséré dans deux rainures voisines l'une de l'autre.

13. Dispositif de stockage selon l'une des revendications précédentes,
**caractérisé par le fait**
**qu'**un tronçon d'appui (2) respectif est implanté sur le panneau de fond (3).

14. Dispositif de stockage selon l'une des revendications précédentes,
**caractérisé par le fait que**
ledit dispositif de stockage est doté d'une dalle de couverture comprenant un compartiment machine (71), un accumulateur d'énergie, une éolienne (91) et/ou un générateur solaire (81),
sachant notamment que ledit accumulateur d'énergie comporte une batterie ou une cuve d'eau,
sachant en particulier qu'un thermocouple, un convertisseur thermoélectrique, un élément Peltier, un générateur entraîné par un moteur Stirling, et/ou un générateur hydroélectrique, est (sont) prévu(s) pour récupérer de l'énergie électrique à partir de ladite cuve d'eau, étant notamment précisé que des convertisseurs thermosolaires délivrent, à ladite cuve d'eau, de l'eau réchauffée en présence d'un rayonnement solaire.

15. Dispositif de stockage selon l'une des revendications précédentes,
**caractérisé par le fait que**
ledit dispositif de stockage est pourvu, dans une zone d'ascenseur, d'un module (110) supplémentaire qui présente, dans son panneau de fond (40), un évidement (43) d'un dimensionnement tel qu'un conteneur puisse être mû d'un trait à travers ledit évidement, au moyen d'un mécanisme de levage,
sachant notamment que ledit module est équipé d'un ou plusieurs élément(s) de compartimentage, en particulier d'une porte roulante (41) et/ou d'une porte coulissante (42).
